# EUROPEAN PATENT SPECIFICATION

(11) **EP 0 536 717 B1**
(45) Date of publication and mention of the grant of the patent: **07.05.1997**
(21) Application number: 92117115.3
(22) Date of filing: 07.10.1992
(51) Int. Cl.: H04N 7/00

(54) **A method to double the sample density of an orthogonally sampled picture**
Verfahren zur Verdopplung von der Abtastdichte eines orthogonal abgetasteten Bildes
Méthode pour doubler la densité d'échantillons d'une image échantillonnée orthogonalement

(30) Priority: 10.10.1991 FI 914781
(43) Date of publication of application: 14.04.1993
(73) Proprietor: SALORA OY, SF-241 01 Salo (FI)
(72) Inventor: Lehtonen, Arto, SF-33700 Tampere (FI)
(74) Representative: Goddar, Heinz J., Dr.

(56) References cited:
- EP-A- 0 477 823
- SMPTE JOURNAL vol. 99, no. 10, October 1990, WHITE PLAIN (USA) pages 815 - 819 CHATEL 'compatible hierarchy of studio standards'
- NHK LABORATORIES NOTE no. 101, 1966, TOKYO FUKUSHIMA 'television bandwidth compression by multi-mode interpolation'

## Description

The invention relates to a method in which a video signal comprising picture elements is converted by digital signal processing means into a video signal with the double sample density both horizontally and vertically.

The television picture of the present PAL system comprises 625 lines, of which 576 lines are active lines appearing on the screen. The fact that the picture is formed by lines is no disadvantage when the screen size is reasonable, below 30", whereby an increased screen size leads to an increased viewing distance, and the line structure of the picture will not appear too disturbing to the eye. Manufacturers today introduce televisions provided with large-sized screens, over 33", and in a picture of this large size the lines are clearly visible and disturbing. The problem is emphasized when a projection display is used to provide very large pictures, whereby e.g. in a back projection television the picture is projected via a mirror onto the screen from behind the screen. The future will bring the High Definition Television, HDTV, which has 1250 lines and 1440 active picture elements (for the luminance) on each line. HDTV must also be able to receive a signal of the present systems, and in order to fully be able to utilize the HDTV definition 16:9, a picture of standard definition must be converted by digital signal processing means into a picture with the double pixel density both horizontally and vertically. It is a natural solution to increase the line rate in any suitable way in order to eliminate the problem caused by a large screen and in comparison a low line rate. As it is not possible to influence the transmission system the television receivers of standard definition use IDTV (Improved Definition Television) functions, whereby the received picture is conditioned by digital signal processing means in the actual receiver before the screen is scanned. With a suitable calculation algorithm the IDTV function can increase the total line rate from 625 to 1250, having 1152 active lines appearing on the screen. When this amount of lines is scanned over a screen, even a large one, the individual lines have a vertical height which is only half of the height they would have in a picture with 625 lines and of the same size. Therefore the line structure will not anymore appear disturbing to the viewer. The number of the samples of a digitized picture in the IDTV television is doubled, but the number of samples on a line is the same. At least initially the future high definition television HDTV must widely use existing recorders and other program sources, in which the picture is recorded by a system with 625 lines. Because the HDTV line rate is 1250 and the aspect ratio 9:16 it is necessary to increase also the horizontal sample density in a digitized normal definition picture.

Line Rate Upconversion, LRU, uses interpolation algorithms which add new lines between the original lines, so that the most serious problem in line rate upconversion is then to devise a suitable interpolation algorithm. Receivers have been constructed, in which the line rate is converted simply so that the lines are duplicated, whereby an inserted line is identical to the original. The algorithms used for this are simple and they are easily realized using either the line memory or the field memory. It is also possible to use line averaging, whereby the interpolated new line is the average of two consecutive lines. This is slightly better than the duplication of lines, but the picture resolution is lower in stationary parts. In the process of increasing the number of horizontal samples it is possible to use algorithms similar to those of line rate upconversion. In the conversion of a normal density picture into an HDTV picture it is thus proceeded so that the sample density is increased separately both horizontally and vertically. The original orthogonal picture remains orthogonal also in the intermediate phase. A disadvantage of the method is the difficulty to keep narrow diagonal lines intact.

SMPTE JOURNAL, vol. 99, no. 10, October 1990, WHITE PLAINS (USA), pages 815-819, CHATEL: "Compatible Hierarchy of Studio Standards" discloses a method to double both horizontally and vertically the number of picture elements in a video signal arriving in the form of a sample sequence, where picture elements form an orthogonal sampling pattern. The orthogonal sampling pattern is converted into a quincunx sampling pattern by interpolation and the quincunx sampling pattern thus provided is further directly converted into an orthogonal sampling pattern. However, it still remains the problem that the edges and lines in the picture easily become distorted.

The Finnish patent application FI-904717 (EP-A-0 477 823) describes a method where an sub-sampled quincunx pattern is converted into an orthogonally sampled pattern. In this method signals, which represent picture elements situated around the picture element to be interpolated, are supplied via necessary delay means to the inputs of a filter where they are weighted in a defined way and combined. The output signal of the filter and the pixels which are immediate neighbors of the pixel to be interpolated are supplied to the inputs of a non-linear filter, and combined in this non-linear filter to generate a signal representing the picture element to be interpolated. The filter output can be limited so that it will be between the two middlemost points in the group of the neighbor points, or so that within the group of said points it is between on one hand the vertical average of two picture elements and on the other hand the horizontal average of two picture elements. The interpolator keeps narrow lines intact and the details sharp. The described method is applicable both to temporal and spatial interpolation.

The method of the above described application could be used as a part in the solution to the problem of converting an orthogonal sampling into an orthogonal sampling with the double sample density both vertically and horizontally. This problem is solved by the method according to claim 1.

First, the orthogonal sampling is converted into a quincunx sampling pattern with a higher density, so that new picture elements are interpolated in the middle of existing picture elements. In a second phase the quincunx sampling pattern thus provided is converted into an orthogonal quincunx sampling pattern with a higher density by interpolating both vertically and horizontally new pixels between the picture elements. The interpolator described in the application FI-904717 can be used in this second phase. The result is an orthogonal pattern having a sample density which is the double of the original. The doubling according to the invention can be provided both within a field and within a picture. When used within a picture the interlaced picture is first converted into progressive non-interlaced pictures by any known method.

The invention is described in further detail with reference to the enclosed drawing in which
figure 1 shows a sampling pattern in different phases;
figure 2 shows a circuit to provide the first phase; and
figure 3 shows a circuit to provide the second phase.

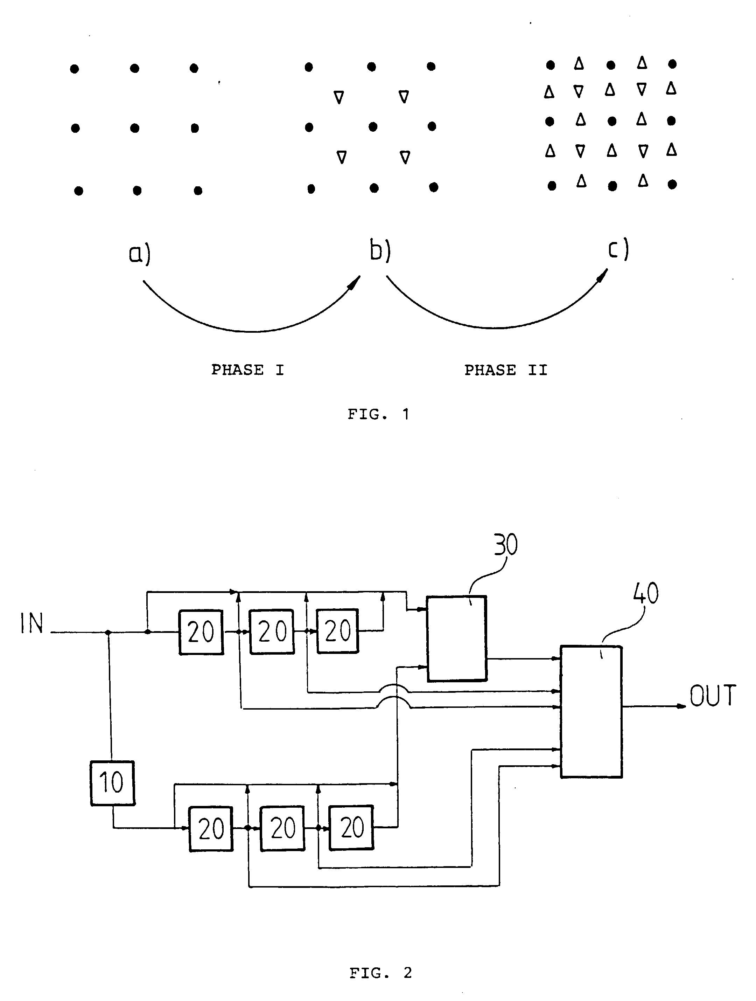

The sampling patterns of figure 1 illustrate the inventive idea. The original state according to figure a) is an orthogonally arranged sampling pattern. The samples marked as black dots can originate in a digitized television picture of normal definition, whereby the samples are taken from each line at uniform intervals. The samples can also originate in any other source, and their number is not essential to the invention. In the first phase, phase I, new pixels are interpolated between existing samples and marked as triangles in figure b). This produces the quincunx-pattern of figure b) having a greater number of pixels than figure a).

In phase I the pixels could also be interpolated with an interpolator similar to that described in the above mentioned patent application. A possible interpolator block diagram is shown in figure 2. The samples of the orthogonal sampling pattern arrive line by line as a sample sequence at the interpolator input IN. The line delay means 10 and pixel delay means 20 are used to select the pixels for interpolation, in this case four pixels from consecutive lines. The linear filter 30 interpolates the candidate sample marked by a triangle in the quincunx-figure b). The candidate sample is supplied to block 40, also having as inputs four samples belonging to the group of original pixels immediately neighboring the candidate sample. The candidate sample is compared with these original samples, and if required, it is corrected by a suitable non-linear operation. The comparison and the possible correction is made in block 40, and its output OUT presents a new interpolated pixel.

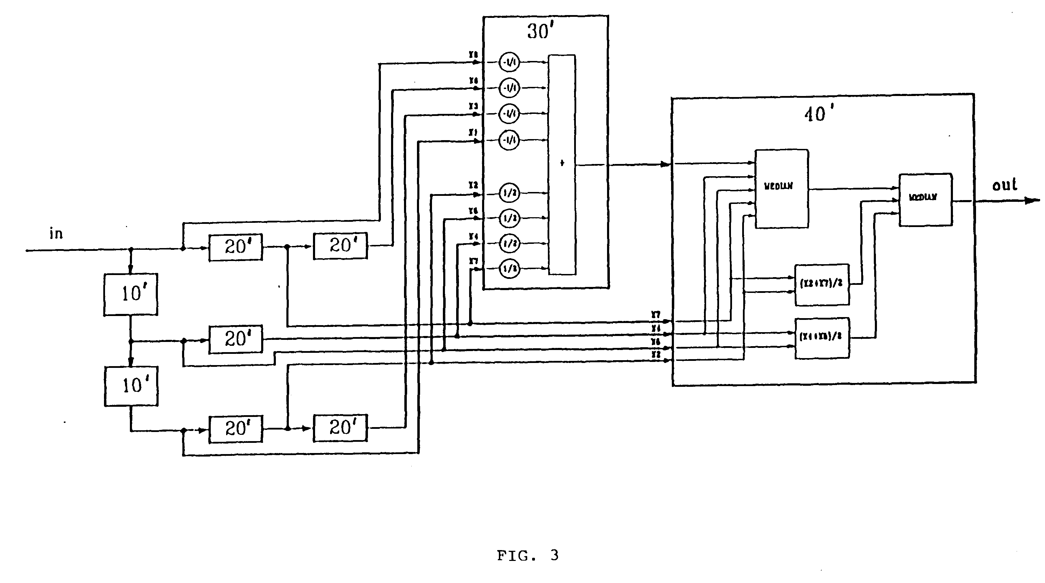

In phase II (figure 1) the quincunx pattern is converted into an orthogonal sampling pattern with a higher density. Here new pixels have been interpolated vertically and horizontally between the pixels shown in figure b). These points are shown in figure c) as triangles with the apex pointing upwards. This conversion can use the method already described in said Finnish patent application FI-904717, but of course any other suitable method may be used. In this connection said method is briefly described with reference to figure 3. The reference numerals are the same as in figure 2. The interpolator according to figure 3 generates a two-dimensional filtering mask with the aid of the line delay means 10' and the pixel delay means 20'. The picture elements of the quincunx-figure b), comprising e.g. the pixels (i.e. eight samples) of the three topmost rows in figure b) when the point encircled with the dotted line in figure c) is interpolated, are directed to the inputs of the filter 30'. The linear filter of this example has then only eight inputs, but the filter mask could also be larger. In the non-linear operation 40' the output from filter 30' is first limited to be between those two of four other inputs (= the four immediate neighboring pixels of the pixel to be interpolated) having the middlemost numerical values. This is effected with a 5-point median. Then the output is once more limited to be between to values, of which one is the average of the vertically immediately neighboring points and the other the average of the horizontally immediately neighboring points. A 3-point median is required for this purpose. The consecutive medians could also be replaced by one larger 7-point median, but such an embodiment is usually more complex.

With the described method to double the number of pixels both horizontally and vertically we achieve the advantage that diagonal edges and lines appear as straight ones in the displayed picture. The method is particularly suited to be used when a television picture with standard definition has to be displayed on an HDTV screen, having the double resolution both vertically and horizontally.

## Claims

1. A method to double both horizontally and vertically the number of picture elements in a video signal arriving in the form of a sample sequence, the picture elements forming an orthogonal sample pattern, where
- the orthogonal sampling pattern is converted into a quincunx sampling pattern by interpolating in a first interpolator first picture elements between the original lines, whereby said picture elements form new incomplete lines and
- the quincunx sampling pattern thus provided is converted into an orthogonal sampling pattern by interpolating in a second interpolator new picture elements both between the picture elements of the original lines and between the picture elements of the new lines, whereby the density of the picture elements is doubled both vertically and horizontally,
characterized in that
- at least eight original picture elements closest to the picture element to be interpolated are supplied to the first interpolator (30), of which four are located on the previous original line and four on the next original line, and that a new picture element on a new line is interpolated from these picture elements, then the obtained new picture element is compared in a non-linear filter (40) with the four closest original picture elements and, if required, corrected by a non-linear operation.

2. Method according to claim 1, characterized in that a group of original picture elements located around the picture element to be interpolated are supplied to the second interpolator (30'), in which they are weighted in a defined way and combined, the obtained result being supplied to a second non-linear filter (40'), whose inputs are supplied with at least those original picture elements immediately neighboring the picture element to be interpolated, whereby the output signal of the second non-linear filter (40') represents the picture element to be interpolated.

3. Method according to claim 2, characterized in that the output of the second non-linear filter (40') is limited so that it will be between two values, one of which is the average of the vertically immediately neighboring picture elements and the other the average of the horizontally immediately neighboring picture elements.

4. Method according to claim 2, characterized in that the first interpolator (30) and the second interpolator (30') are non-linear digital filters.

## Patentansprüche

1. Ein Verfahren zur horizontalen und vertikalen Verdopplung der Anzahl von Bildelementen in einem in Form einer Abtastsequenz eintreffenden Videosignal, bei dem die Bildelemente ein orthogonales Abtastraster bilden, wobei
- das orthogonale Abtastraster durch Interpolieren von ersten Bildelementen zwischen den ursprünglichen Zeilen in einem ersten Interpolator in ein Quincunx-Abtastraster umgewandelt wird, wodurch die Bildelemente neue unvollständige Zeilen bilden, und
- das auf diese Weise gelieferte Quincunx-Abtastraster durch Interpolieren von neuen Bildelementen sowohl zwischen den Bildelementen der ursprünglichen Zeilen als auch zwischen den Bildelementen der neuen Zeilen in einem zweiten Interpolator in ein orthogonales Abtastraster umgewandelt wird, wodurch die Dichte der Bildelemente vertikal und horizontal verdoppelt wird,
dadurch gekennzeichnet, daß
- wenigstens acht ursprüngliche Bildelemente, die dem zu interpolierenden Bildelement am nächsten sind, an den ersten Interpolator (30) geliefert werden, von denen sich vier auf der vorangehenden ursprünglichen Zeile und vier auf der nächsten ursprünglichen Zeile befinden, und daß ein neues Bildelement auf einer neuen Zeile anhand dieser Bildelemente interpoliert wird, dann das erhaltene neue Bildelement in einem nichtlinearen Filter (40) mit den vier nächsten ursprünglichen Bildelementen verglichen wird und, falls erforderlich, durch eine nichtlineare Operation korrigiert wird.

2. Verfahren nach Anspruch 1, dadurch gekennzeichnet, daß eine Gruppe von ursprünglichen Bildelementen, die sich um das zu interpolierende Bildelement befinden, an den zweiten Interpolator (30') geliefert wird, in dem sie in einer definierten Weise gewichtet und kombiniert werden, das erhaltene Ergebnis an einen zweiten nichtlinearen Filter (40') geliefert wird, dessen Eingänge mit wenigstens denjenigen ursprünglichen Bildelementen versorgt werden, die das zu interpolierende Bildelement unmittelbar umgeben, wodurch das Ausgangssignal des zweiten nichtlinearen Filters (40') das zu interpolierende Bildelement darstellt.

3. Verfahren nach Anspruch 2, dadurch gekennzeichnet, daß die Ausgabe des zweiten nichtlinearen Filters (40') begrenzt wird, so daß sie zwischen zwei Werten liegen wird, wobei einer der Mittelwert der vertikal unmittelbar benachbarten Bildelemente ist und der andere der Mittelwert der horizontal unmittelbar benachbarten Bildelemente ist.

4. Verfahren nach Anspruch 2, dadurch gekennzeichnet, daß der erste Interpolator (30) und der zweite Interpolator (30') nichtlineare Digitalfilter sind.

## Revendications

1. Procédé pour doubler à la fois horizontalement et verticalement le nombre d'éléments d'image dans un signal vidéo arrivant sous la forme d'une séquence d'échantillons, les éléments d'image formant un motif d'échantillonnage orthogonal, dans lequel
le motif d'échantillonnage orthogonal est converti en un motif d'échantillonnage en quinconce par interpolation dans un premier interpolateur de premiers éléments d'image entre les lignes initiales, de façon que lesdits éléments d'image forment de nouvelles lignes incomplètes, et
le motif d'échantillonnage en quinconce ainsi fourni est converti en un motif d'échantillonnage orthogonal en interpolant dans un second interpolateur de nouveaux éléments d'image à la fois entre les éléments d'image des lignes initiales et entre les éléments d'image des nouvelles lignes, de sorte que la densité des éléments d'image est doublée à la fois verticalement et horizontalement,
caractérisé en ce que
au moins huit éléments d'image initiaux, les plus proches de l'élément d'image à interpoler, sont fournis au premier interpolateur (30), dont quatre sont situés sur la ligne initiale précédente et quatre sont situés sur la ligne initiale suivante, et en ce qu'un nouveau élément d'image sur une nouvelle ligne est interpolé à partir de ces éléments d'image, et ensuite le nouveau élément d'image obtenu est comparé dans un filtre non linéaire (40) aux quatre éléments d'image initiaux les plus proches, et, si nécessaire, est corrigé à l'aide d'une opération non linéaire.

2. Procédé selon la revendication 1, caractérisé en ce qu'un groupe d'éléments d'image initiaux situés autour de l'élément d'image à interpoler sont fournis au second interpolateur (30'), dans lequel ils sont pondérés d'une manière définie et combinés, le résultat obtenu étant fourni à un second filtre non linéaire (40'), dont des entrées sont alimentées avec au moins ces éléments d'image initiaux immédiatement voisins de l'élément d'image à interpoler, de façon que le signal de sortie du second filtre non linéaire (40') représente l'élément d'image à interpoler.

3. Procédé selon la revendication 2, caractérisé en ce que la sortie du second filtre linéaire (40') est limitée de façon à se trouver entre deux valeurs, dont l'une est la moyenne des éléments d'image immédiatement voisins verticalement et l'autre est la moyenne des éléments d'image immédiatement voisins horizontalement.

4. Procédé selon la revendication 2, caractérisé en ce que le premier interpolateur (30) et le second interpolateur (30') sont des filtres numériques non linéaires.
